# EUROPEAN PATENT APPLICATION

(11) **EP 3 442 160 A1**
(43) Date of publication of application: **13.02.2019**
(21) Application number: 17185076.1
(22) Date of filing: 07.08.2017
(51) Int. Cl.: H04L 9/32, H04L 29/06

(54) **PRUNING OF AUTHENTICATION TREES**

(71) Applicant: Siemens Aktiengesellschaft, 80333 München (DE)
(72) Inventor: Cuellar, Jorge, 82065 Baierbrunn (DE); Kasinathan, Prabhakaran, 81549 München (DE)

(57) **Abstract**

Present invention concerns a method of operating a server system (100). The method comprises providing an updated authentication tree data structure based on a pruning authentication tree data structure, wherein the pruning authentication tree data structure comprises a first set of N data blocks (d0,...,d7) and a first root hash value (Ro), each of the data blocks of the first set being associated to the first root hash value (Ro) via an associating authentication path. The updated authentication tree data structure comprises a second set of data blocks (d4,...,d11), the second set being determined based on pruning M data blocks (d0,..., d3) from the first set, the updated authentication tree data structure further comprising a pruning hash value (Rd) determined based on the pruned data blocks (d0,..., d3), and further comprising a second root hash value (Rc), the second root hash value being determined based on the second set, each of the data blocks (d4, ..., d11) of the second set being associated to the second root hash value (Rc) via an associating authentication path.
Present invention also pertains to related devices and methods.

## Description

Present invention concerns the field of authentication tree data structures, in particular in the context of Merkle trees.

### Background of the Invention

Authentication trees represent data structures that are used in many modern applications, in particular in the form of Merkle trees as described in US 4,309,569.

Typical applications are, for example, public ledgers, blockchains as used e.g. for bitcoin, certification handling, etc. In many cases, the trees, which comprise data and associated information like hash values, are continuously growing in size.

For example, in 2017, the size of bitcoin block headers and transactions included in the associated tree structure without database indices reached about 99GB. Similarly, Certification Transparency, a digital certification organisation, provides public logs based on certification trees that continually grow, as certificates can be appended, but not deleted.

Generally, authentication tree data structures increase in size, as information is added, but other changes to the trees are avoided to keep the authentication structure intact. Such trees are often made available to the public by server systems, such that they are accessible by a large number of client systems.

With the steady increase in size of a tree, handling of the tree by a server system will increasingly be difficult and resource intensive. In particular, signalling and storage overhead may become problematic. Also, the computational resources needed when handling a tree, for example when searching it, continually increase with tree size.

### Disclosure of the Invention

It is an object of the present invention to describe approaches allowing shrinking or limiting of authentication tree data structures, while limiting impact on information loss. It should be noted that in the following, an authentication tree data structure may be referred to as simply authentication tree or as data structure.

Accordingly, there is disclosed a method of operating a server system. The method comprises providing an updated authentication tree data structure based on a pruning authentication tree data structure. The pruning authentication tree data structure comprises a first set of N data blocks and a first root hash value, each of the data blocks of the first set being associated to the first root hash value via an associating authentication path. Furthermore, the updated authentication tree data structure comprises a second set of data blocks, the second set being determined based on pruning M data blocks from the first set. The updated authentication tree data structure further comprises a pruning hash value determined based on the pruned data blocks, and further comprises a second root hash value, the second root hash value being determined based on the second set, each of the data blocks of the second set being associated to the second root hash value via an associating authentication path. Accordingly, the size of the data structure may be limited by pruning data blocks from a set of data blocks. Since the pruning hash value is kept in the new, respectively updated, data structure, it is still possible to determine whether a specific a data block has been included in an earlier version of the data tree before pruning, or not, e.g. for a client system. Thus, signalling overhead and computational resources when handling authentication data tree structures may be lowered, as fewer data blocks have to be stored or provided in the data structure.

Also, there is disclosed a server system. The server system is adapted for providing an updated authentication tree data structure based on a pruning authentication tree data structure. The pruning authentication tree data structure comprises a first set of N data blocks and a first root hash value, each of the data blocks of the first set being associated to the first root hash value via an associating authentication path. Furthermore, the updated authentication tree data structure comprises a second set of data blocks, the second set being determined based on pruning M data blocks from the first set. The updated authentication tree data structure further comprises a pruning hash value determined based on the pruned data blocks, and further comprises a second root hash value, the second root hash value being determined based on the second set, each of the data blocks of the second set being associated to the second root hash value via an associating authentication path. The server system may be implemented as a computer system, which may comprise one or more computers and/or storage units and/or associated communication interfaces, in particular internal interfaces. The system may be distributed or localised. A server system may comprise processing circuitry and a communication interface, and/or may be adapted to utilise such for providing the updated authentication tree data structure.

The second root hash value may be determined based on the first root hash value, and/or based on the pruning hash value. In particular, the first root hash value and/or the pruning hash value may be included into an authentication path, and/or the second root hash value may be determined based on one or more integrity functions like hash functions being applied on the first root hash value and/or pruning hash value. In this way, authentication of the first root hash value may be facilitated in the context of the updated authentication tree.

The second set may further be determined based on adding L data blocks, and the second root hash value may be determined based on the thus determined second set. Accordingly, new data blocks may be added. Such adding may be based on queries from one or more client systems. In some cases, the new data blocks may correspond to pruned data blocks.

The updated authentication tree data structure may comprise a plurality of different pruning hash values, wherein each pruning hash value may be associated to a different pruning authentication tree data structure, which may have been valid at different points in time. The additional pruning hash values may have been included in the pruning authentication tree data structure. Accordingly, the updated authentication tree may comprise a history, or sequence, of older authentication trees , the history being represented by the first root hash values and/or pruning hash root values. An older tree may be considered a pruning tree before it was updated as described herein. The updated authentication tree may generally comprise additionally information pertaining to its root hash value and/or pruning hash value/s, for example one or more time indicators or timestamps indicating a validity time, and/or time of invalidity, and/or time of updating, and/or time of publishing.

The pruning authentication tree data structure and the updated authentication tree data structure may represent Merkle trees or Tiger trees. Such trees are particularly suitable as authentication trees. It may be considered that the authentication tree data structure represents a smart contract, public ledger or log, a blockchain, a certification ledger, etc. In particular, the data blocks may contain or represent associated data. The authentication tree data structures may represent binary trees. However, non-binary trees may also be considered.

The pruning hash value may be associated to a node of the pruning authentication tree, the node being a node reached from all data M data blocks to be pruned via associating authentication tree paths. In particular, the node may be the node closest to the data blocks to be pruned in the tree. For the paths, only unidirectional links away from the data blocks may be considered. Accordingly, the pruning hash value may be a good representative of the data blocks to be pruned, facilitating validation of such pruned data blocks.

Moreover, a method of operating a client system is disclosed. The method comprises validating authenticity of a data block of an authentication tree data structure, validating being performed based on a pruning authentication value and a second root hash value received from a server system, for example in a response or response message, which may be triggered by a query of the client system. The pruning authentication value and the second root hash value are associated to an updated authentication tree data structure from which the data block has been pruned. Accordingly, the client system may validate a data block that has been pruned and is not included in the updated tree anymore. The server system may be a server system as described herein.

In addition, a client system is described. The client system is adapted for validating authenticity of a data block of an authentication tree data structure, validating being performed based on a pruning authentication value and a second root hash value received from a server system, for example in a response or response message, which may be triggered by a query of the client system. The pruning authentication value and the second root hash value are associated to, and/or included in, an updated authentication tree data structure from which the data block has been pruned. The client system may be implemented as a computer system, which may comprise one or more computers and/or storage units and/or associated communication interfaces, in particular internal interfaces. The system may be distributed or localised. A client system may comprise processing circuitry and a communication interface, and/or may be adapted to utilise such for validating.

Generally, pruning hash value and second root hash value may be received at different occasions and/or in different messages.

An authentication system comprising a server system as disclosed herein and at least one client system as described herein is also proposed.

A method described herein may especially be carried out, completely or in part, by a computer system like the server system or the client system. To this end, the method may be formulated as a computer program product with program code instructions. The above described system may comprise the computer system. Advantages or features of the method may apply to the system and vice versa.

In particular, a computer program for carrying out and/or controlling one of the methods described herein when executed on processing circuitry and/or by a system may be considered. The program may comprise modules, which may be associated to actions performed. For example, the program may comprise a providing module for providing the updated authentication tree data structure, and/or a determining module for determining the pruning hash value, and/or a, e.g. second, determining module for determining the second root hash value, and/or a pruning module for pruning data blocks. An exemplary program associated to a client system may comprise a validating module for validating, and/or a receiving module for receiving the hash values from the server system, and/or a query module for querying the server system. Modules or sub-modules thereof may be distributed over different subcomponents or subsystems within a system when executed.

Alternatively, or additionally, a storage medium storing such a program may be considered. The medium may be distributed, e.g. on a server system or client system, or be represented by one device.

Circuitry may comprise integrated circuitry. Processing circuitry may comprise one or more processors and/or controllers, like microcontrollers, and/or ASICs (Application Specific Integrated Circuitry) and/or FPGAs (Field Programmable Gate Array), or similar, which may be distributed over different devices connected via suitable communication interfaces, for example interfaces internal to the circuitry or associated device. It may be considered that processing circuitry comprises, and/or is operatively connected or connectable to one or more memories or memory arrangements, which may be considered to be implemented as storage units. A memory arrangement may comprise one or more memories. A memory may be adapted to store digital information. Examples for memories comprise volatile and nonvolatile memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). A communication interface may comprise circuitry and/or cabling for communication, and/or may be adapted to comply with one or more communication protocols. A communication interface may be cable-bound, and/or wireless, and/or optical. It may be considered that a system is connected to another system via a communication interface, in particular Ethernet and/or WLAN (Wireless Local Area Network) and/or telephony and/or internet, e.g. based on IP communication. Between two parties of a communication, like a client system and a server system, there may a plurality of communication interfaces via which the communication is run.

Providing an authentication tree data structure may be based on, and/or comprise, determining the data structure, for example as described herein. Determining the data structure may comprise digitally signing the structure, e.g. the associated root hash value like the second root hash value. Such signing may be based on a public/private key pair, and/or based on a digital certificate.

Providing may comprise any one or any combination of publishing, making available for clients, making accessible, storing, responding to requests and/or queries pertaining to the provided structure, etc., which may involve utilising processing circuitry and/or a communication interface. Providing the data structure may generally comprise transmitting data related to the data structure, and/or parts of the data structure or information contain therein, or the whole data structure.

Pruning may comprise deleting the data blocks, and may also comprise deleting associating tree paths up to, but not including, the pruning hash value. The tree paths, and in some cases the data blocks, and/or the pruning hash value and/or the first root hash value, may be stored separately from the updated authentication tree data structure, and/or may be considered to be linked or linkable thereto based on the pruning hash value and/or the first root hash value. Pruning may be performed based on pre-defined or configured rules, and/or may be triggered based on rules or actions, e.g. based on an administrator action. For pruning, M may be smaller or equal to N. In some cases, the pruning hash value may be the first root hash value, e.g. if M=N.

An authentication tree data structure may provide a tree structure comprising a plurality of node layers, which may be referred to simply as layers. The lowest layer of nodes may be considered leaf nodes, also referred to as leaves, of the tree, which may represent data blocks. Layers above the leaf node layer may be determined based on an integrity function, which may have an I-tuple of input, which may be provided by a corresponding number of nodes from the lower layer or layers. The output of an integrity function may be represented in a node of a higher layer, which may be considered an authentication path tree node, or a node of a proof-path. Nodes of increasingly higher layers may provide input for an integrity function to provide output for a next higher layer, until output for a single node is provided, the root node. The root node may be considered the highest-layer node in the tree. Nodes providing input for a higher layer node may be referred to as children of the higher layer node. A typical value for I is 2, but other values may be considered, e.g. for non-binary trees. For different layers, different values of I may be used. In particular, the node layer above the leaf node layer may be determined based on an integrity function with only one input node. Higher layer nodes may in many variants have at least 2 input node layers. An integrity function may be a one-way function, in particular a hash function. Applying a hash function on input may be referred to as hashing, its output may be considered a hash value or hash. In particular for layers below the root node, or below the node associated to the pruning hash value, different integrity functions than hash functions may be used, e.g. two-way functions or signature-based functions. For providing or determining an authentication tree, an integrity function, in particular a hash function, may be considered to provide an encrypted representation of the input, which may be considered unique, at least almost, or at least for practical purposes. For different layers, the same function may be used, e.g. recursively, although variants with different functions for different layers may be considered. The association of functions to layers may be considered inherent to the data structure, and/or to be known to the client system and the server system. An integrity function may be considered any function used for protecting data integrity, in particular for data in the nodes of a tree, e.g. data blocks and integrity values in higher layer or proof-path nodes, like hash values. In some cases, an integrity function may also provide encryption and/or authentication functionality.

An associating authentication path may represent or include the nodes, and/or the data or function results represented by the nodes, associating a data block to the root hash value, and/or a leaf node to the root node. For different data blocks or leaf nodes, the paths will be different. An associating authentication path may be considered to comprise or represent the information needed to validate a data block for a client system. An associating authentication path may be stored in the data structure and/or be considered part thereof. An authentication tree data structure may include and/or comprise and/or be adapted to provide a path for each data block or leaf node. Generally, an associating authentication path may indicate and/or comprise the results of integrity functions applied to nodes of the authentication tree data structure starting with the data block it is associated to, for example in a manner corresponding or mapping to the node structure.

Determining a hash value based on data or a value, which may be considered to represent the basis for such determining, may comprise applying one or more hash and/or integrity functions, e.g. recursively or in sequence, to arrive from the basis at the desired value respectively node or node layer. This may include following several functional paths, analogously to and/or resulting in associating authentication paths, based on which the structure may define or associated the hash value.

Validating the authenticity of a data block may be based on an associating authentication path and may comprise applying the integrity functions for one or more layers starting with the data block to be validated, and comparing the results with the information provided with the associating authentication path. The associating authentication path, which may be provided by the server system, may also be referred to as proof-path.

Any hash function or combination of hash functions deemed suitably secure and/or computing efficient for an application may be considered. A hash function may be considered an exemplary integrity function that maps a data block to a fixed size hash. However, hash functions with variable size results may be considered in some applications as well. Examples of hash functions comprise keyed or unkeyed hash functions, and/or cryptographic hash functions, in particular hash functions of the SHA-N or MD-N families, or Tiger hash functions.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary Merkle tree according to present invention;
- Figure 2: shows an exemplary initial authentication tree in an exemplary stage according to the invention;
- Figure 3: shows an exemplary pruning authentication tree in a further exemplary stage according to the invention;
- Figure 4: shows an exemplary updated authentication tree in yet a further exemplary stage according to the invention; and
- Figure 5: shows an exemplary authentication system according to the invention.

### Detailed Exemplary Embodiments of the Invention

The following notation is used with reference to the figures:

| notation | meaning |
|---|---|
| s | Data block (or leaf-node) |
| R_{O} | old MT root-hash / first root hash value |
| R_{d} | delete MT root-hash / pruning hash value |
| R_{c} | current MT root-hash / second root hash value |
| ? | a query |
| # | number of elements |
| #d | number of deleted data blocks |

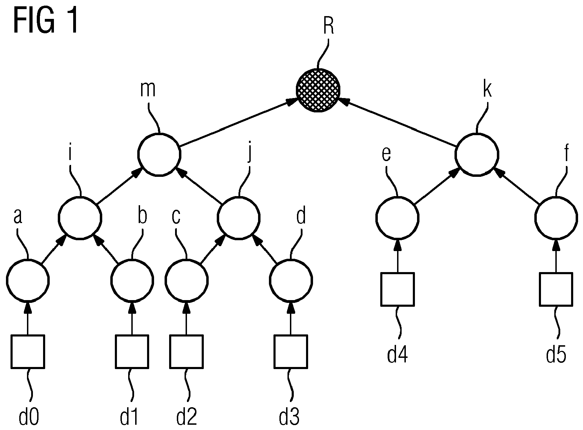

Figure 1 shows a Merkle tree as an exemplary authentication tree structure.

In Figure 1, an exemplary Merkle tree with only 6 leaf nodes (d0 to d5) is shown, but the Merkle tree may comprise a larger number of leaf nodes. The leaf-nodes may be considered to represent data blocks, and are presented in rectangular shape. To each leaf node, there is associated a hash node. Each hash node represents the result of a one- way function H, in particular a hash function, applied to a respective leaf-node or data block. This result may be referred to as leaf-node-hash. For example, a leaf-node-hash a is created by applying hash function H to leaf-node d0, to create H(d0). The hash function may have two inputs, or be applied twice on d0, to create H(d0, d0) as leaf-node hash. Similarly, leaf-node hashes b, c, d, e, and f may be created for leaf nodes d1 to d5, and associated to corresponding hash nodes. Additional leaf-nodes may be treated analogously.

Leaf-node hashes are paired together and hash function H is applied to each pair. For example, a and b are hashed together, hashing referring to applying a hash function, to create an associated node-hash i=H(a,b) associated to a corresponding node of the Merkle tree. Accordingly, determining a hash value associated to a node may comprise applying the functions on starting values/data blocks to arrive at the node or corresponding value. The arrow in Figure 1 shows the direction of a hash function applied and to create the resulting hash value. Variants may be considered in which the resulting hash value (i) can have pointers to reach its child nodes (a and b). As shown in Figure 1, the hash function is applied recursively to create the root node, also referred to as MT-root, of a binary tree, also known as a Merkle-tree (MT), however, based on the number of inputs for hash functions, non-binary trees may be considered. The MT-root (MTR) hash value is therefore unique to the set of leaf-nodes (d0 to d5), in other words, any change to leaf-nodes will change the MTR value, as this would imply different results along the associated path of functions. Accordingly, tree authentication can be used to prove that a data block, for example d0, exists in this form in the MT, using the authentication tree path, which is considered validating the data block. The authentication tree paths for validation include node-hashes, to provide the information to be able to (re-)construct the MTR. For example, for d0, the authentication tree path includes hash values of b,j and k, which are required to compute and verify the MTR. The root hash value may generally be considered part of each path, or may be treated separately as the end point of each path. A tree-authentication method can be applied in various applications for example, it can be used to provide integrity to set of transactions, or data, by applying one way hash function recursively to create a MTR hash, and authenticating the MTR by signing it. The signed MTR ensures the data comes from the person who signed it and the data, associated to leaf-nodes in MT, is integrity protected due to the integrity functions applied. The root node may generally be considered the topmost nodes, with increasingly lower layers leading to the leaf nodes at the bottom, representing the lowest node layer.

The size, which may for example be measured in terms of number of bytes and/or number or size of data blocks, of a tree data structure increases whenever a new data block is appended to it, as a result, at some point in time, the server system's storage capacity could be reached, or overhead in signalling and processing the tree may become problematic. The server system may generally be considered to represent, for example an entity or arrangement that stores or publishes the tree, for example the MT or public-ledger.

Pruning an authentication tree data structure may be triggered based on rules, which may pertain to the structure's size, and/or predicted size and/or growing rate and/or on indication that data blocks, in particular data blocks to be pruned, are obsolete, and/or on indication of age of data blocks, and/or periodically, and/or upon request or action, e.g. by an administrator or a client system.

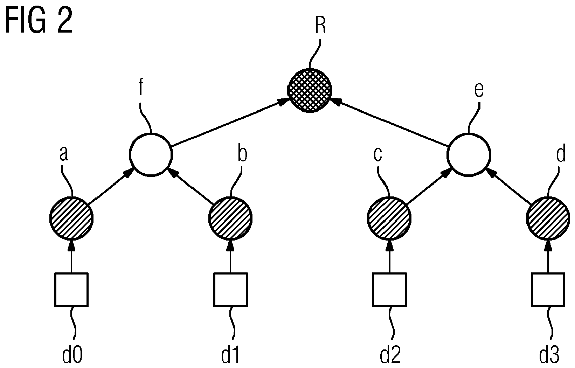

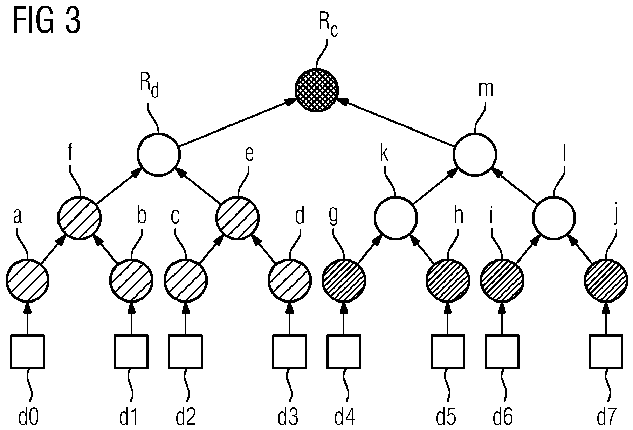

Figure 2 shows by way of example an initial status of a MT, with 2n1 (for example, n1=2, four) leaf-nodes. Over time, the tree may grow bigger and look like shown in Figure 3 with N=2n1+k1 (for example, n1=2, k1=4, eight) data blocks in associated leaf nodes. In this example, this may be assumed to be the maximum size of the tree, e.g. for reasons such as performance, storage capacity, etc. Thus, a set of eight data blocks representing a first set is comprised in the MT. The server system decides to prune, respectively delete, M=2n1+d1 number of data blocks (for example, n1=2, d1=0, four data blocks, for example blocks a, b, c and d) of this first set from the MT, e.g. based on pre-defined administrator rules, to create a second set of data blocks by pruning the first set. Thus, the MT may be considered an example of a pruning authentication tree data structure. With the data blocks, the nodes in the path to a pruning hash value Rd are also to be pruned or deleted. Rd is also referred to as Deleted MT root-hash. Generally, the pruning hash value may correspond to the lowest layer node that can be reached via associating tree paths, which are indicated by arrows, from the leaf nodes to be deleted. In some cases, it may correspond to a root hash value, in particular a root hash value for an older authentication tree comprising only the data blocks to be deleted. In the example shown in Figure 3, the pruning hash value Rd is on the second-highest node layer, below the root node, but it may be even lower, depending on the overall number of layers, considered to represent the height of the tree, and the data blocks to be pruned.

The Root-Hash of to-be-deleted-MT nodes, also called Deleted-MT-Root, or Rd, and representing a pruning hash value, is not deleted, and is kept in the current-MT, which represents the MT after pruning, or the updated authentication tree data structure. The Deleted-MT-Root Rd may be provided for, and/or used by, a client system trying to validate Rd and/or the authentication tree path from Deleted-MT-Root Rd to current-MT-root Rc, and/or a data block pruned in reference to the updated authentication tree. The threshold size (2n1+k1) of MT in this example is predefined by the server administrator. It should be noted that in some variants, the pruning hash value may be part of the data structure, but not involved in any authentication tree path.

After deleting the data blocks and associated nodes below the node containing Rd, additional information may be associated in the data structure to the Deleted-MT-root Rd, respectively the associated node. Additional information may for example comprise time indication or timestamp of deletion, address information of a location, which may be temporary, where deleted-nodes are stored, in particular stored outside the data structure, number of deleted nodes (#d) or data blocks, etc. The pruning algorithm may be triggered automatically, for example when the MT size reaches a threshold size. Threshold parameters and information to be stored associated to Rd may be selected for optimized server performance. Once the server system reaches the threshold limit, the server executes the procedure described to prune the data blocks and other nodes, determines the updated tree, also referred to as current MT, including the new or second root hash value Rc, and publishes the current-MT. An exemplary pruning algorithm 1 in pseudo code is shown as algorithm 1.

**Algorithm 1:** Procedure to delete/prune a part of MT

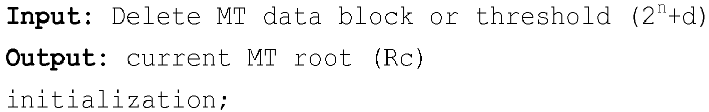

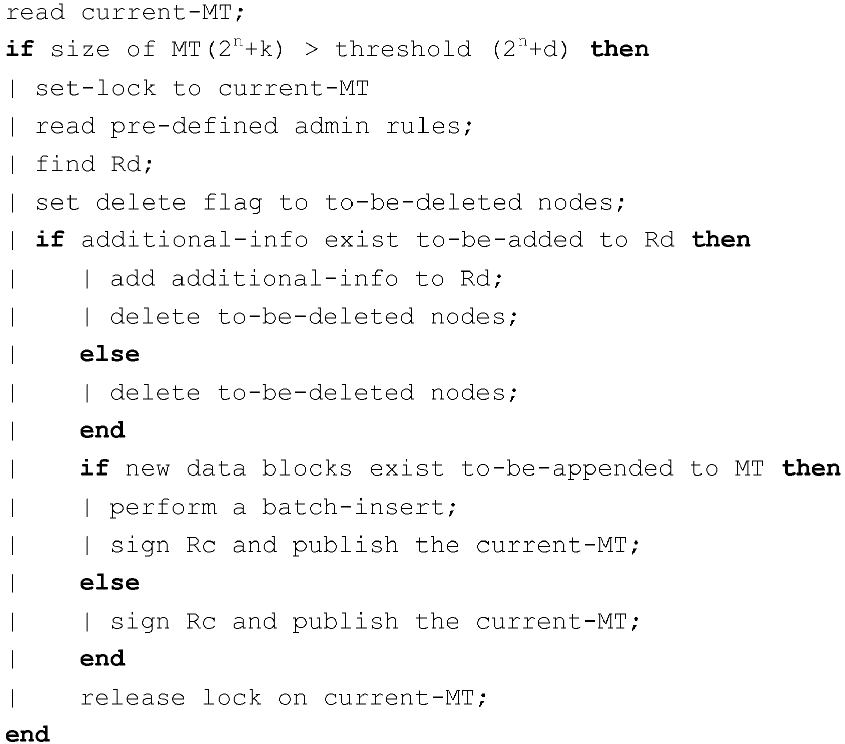

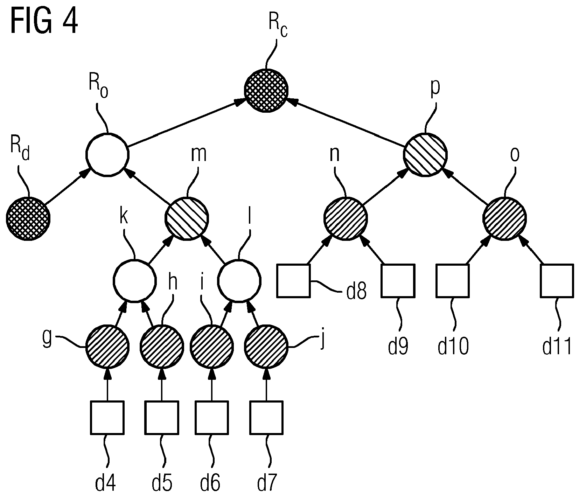

Figure 4 shows an exemplary updated authentication tree data structure. The deleted-MTR Rd, old MTR Ro, associated to the tree before pruning, representing a first root hash value, and current Rc, representing a second root hash value, are present. These three hash values may be used to prove that an item-of-interest (IoI) or deleted-node, for example d3, was part of the pruned set of data blocks before pruning, represented by Rd, and that Rd is currently present in the updated current-MT with MTR Rc, thus validating d3, or alternatively invalidating d3, if the hashes are not matched for a wrong data block. It should be noted that data blocks d8 to d11 have been added to the updated authentication tree, which are considered for determining Rc, which represents the second root hash value.

In some cases, it may happen that a client system may have an item-of-interest (IoI), a data block (e.g., d3) that was, or may have been, pending successful validation, included in an older authentication tree, considered a pruning authentication tree, like a MT, but which is not included in a current authentication tree due to being pruned in the meantime. The client system may have the corresponding MT-Root hash value Rc of the old tree, which represents a first root hash value, which may be referred to as old-MTR Ro in the following. One or more of the following occurrences may have happened until then:
1. The server system's MT may have reached the size threshold, or another trigger may have been activated, therefore the server has deleted some data blocks, which includes data block d, and has published the updated current-MT.
2. The client system with the old MTR Ro, representing a first root hash value, may not have the current-MT's root value representing a second root hash value, Rc.
3. The client system may request a prefix-proof info procedure, described in exemplary pseudo-code as algorithm 2, to receive an authentication-path, so that the client system can be sure, e.g. validate, that data block d was a part of the data structure before pruning. It should be noted that the procedure may be performed without the client system knowing that it does not have up-to-date information.

Algorithm 2: Proof-path query for Deleted-MT-Root Rd

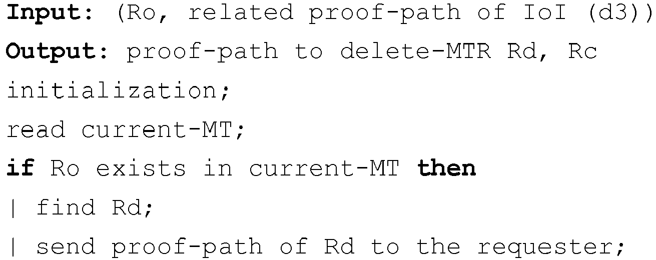

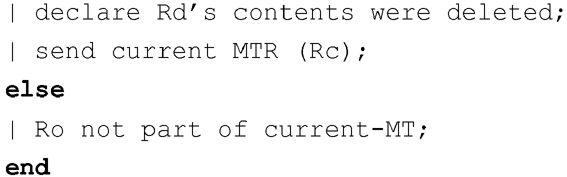

The client system may send an authentication-path (prefix-proof-path or proof-path) request or query to the server system, e.g. after above mentioned occurrences, or in other circumstances. Together with the request, the client system may send additional information, for example, the old MTR (Ro), and/or Item-of-Interest (IoI) d3.

Based on the request/query, the server system may perform a searching procedure to find whether the IoI (d3) was part of an older tree, as indicated by Rd or not. This may be performed after the server system has checked whether the IoI is included in the current-MT. If the IoI is validated, the server system transmits to the client system a response indicating the proof-path associated to node Rd as part of current MT with MTR Rc.

The client system then verifies that its IoI (d3) was part of the pruned data based on Rd and the provided proof-path.

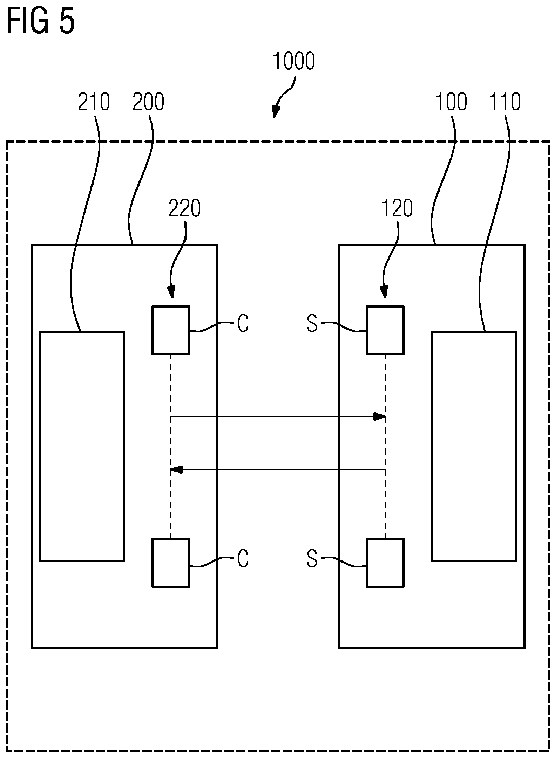

Figure 5 shows an authentication system 1000 comprising a server system 100 and at least one client system 200. The server system may comprise processing circuitry 110 and a communication interface 120 to facilitate communication with client system 200, which comprise its own processing circuitry 210 and a corresponding communication interface 220. Over the communication interfaces, the request including R0 and the response with proof-path and possibly current Rc are exchanged. The response may indicate that data blocks associated to Rd have been pruned or deleted.

The client system may execute the following actions to validate that the IoI d3 was part of old tree:
- checking, whether Rd is part of the updated/current tree with root hash value Rc, which represents the second root hash value, based on the proof-path it received with the response;
- optionally, for example if Rd is not equal to Ro, determining/validating Ro based on Rd, e.g. by computing H(Rd, m) as indicated in Figure 4;
- determining/validating Rc, e.g. by computing H(Ro, p).

If the determined Rc matches the published MT's root Rc, then the client system knows that Rd exists in the updated tree Rc, and thus it is validated that IoI d3 was present in the old tree.

The proof path may include the necessary information/hash values to perform the determining steps.

If, as shown in Figure 4, Ro > Rd, respectively Ro is of higher layer than Rd, during the validation using the proof-path of Rd, the client's last seen MTR Ro will appear either in the proof-path given by the server, and/or as a result of computing the hash during the process of (re-)constructing/validating Rc. In this example, this occurs when computing H(Rd, m) results in Ro..

Alternatively, or additionally to the above, there may be considered a method of operating a server system, the method comprising transmitting a response to a client system query, the response indicating a proof-path, e.g. to a pruning hash value and/or second root hash value as described herein, and/or a second root hash value as described herein. A server system adapted for such transmitting may be considered. The server system may be implemented as a computer system, which may comprise one or more computers and/or storage units and/or associated communication interfaces, which may be internal. The system may be distributed or localised. The server system may comprise processing circuitry and a communication interface, and/or may be adapted to utilise such for the transmitting. Circuitry and/or interface may be shared for providing the updated authentication tree data structure, if implemented together.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

## Claims

1. Method of operating a server system (100), the method comprising providing an updated authentication tree data structure based on a pruning authentication tree data structure, wherein
the pruning authentication tree data structure comprises a first set of N data blocks (d0,...,d7) and a first root hash value (Ro), each of the data blocks (d0, ..., d7) of the first set being associated to the first root hash value (Ro) via an associating authentication path; wherein further
the updated authentication tree data structure comprises a second set of data blocks (d4,...,d11), the second set being determined based on pruning M data blocks (d0,..., d3) from the first set, the updated authentication tree data structure further comprising a pruning hash value (Rd) determined based on the pruned data blocks (d0, ..., d3), and further comprising a second root hash value (Rc), the second root hash value (Rc) being determined based on the second set, each of the data blocks (d4, ..., d11) of the second set being associated to the second root hash value (Rc) via an associating authentication path.

2. Method according to claim 1, wherein the second root hash value (Rc) is determined based on the pruning hash value (Rd) .

3. Method according to claim 1 or 2, wherein the second set is further determined based on adding L data blocks (d8,..., d11), and the second root hash value (Rc) is determined based on the thus determined second set.

4. Method according to one of the preceding claims, wherein the updated authentication tree data structure comprises a plurality of different pruning hash values (Rd), wherein each pruning hash value (Rd) is associated to a different pruning authentication tree data structure.

5. Method according to one of the preceding claims, wherein the pruning authentication tree data structure and the updated authentication tree data structure represent Merkle trees or Tiger trees.

6. Method according to one of the preceding claims, wherein the pruning hash value (Rd) is associated to a node of the pruning authentication tree, the node being a node reached from all data M data blocks (d0, ..., d3) to be pruned via associating authentication tree paths.

7. Server system (100), the server system (100) being adapted for providing an updated authentication tree data structure based on a pruning authentication tree data structure, wherein
the pruning authentication tree data structure comprises a first set of N data blocks (d0, ..., d7) and a first root hash value (Ro), each of the data blocks (d0, ..., d7) of the first set being associated to the first root hash value (Ro) via an associating authentication path; wherein further
the updated authentication tree data structure comprises a second set of data blocks (d4,..., d11), the second set being determined based on pruning M data blocks (d0, ..., d3) from the first set, the updated authentication tree data structure further comprising a pruning hash value (Rd) determined based on the pruned data blocks (d0, ..., d3), and further comprising a second root hash value (Rc), the second root hash value (Rc) being determined based on the second set, each of the data blocks (d4, ..., d11) of the second set being associated to the second root hash value (Rc) via an associating authentication path.

8. Server system according to claim 7, wherein the second root hash value (Rc) is determined based on the pruning hash value (Rd).

9. Server system according to claim 7 or 8, wherein the second set is further determined based on adding L data blocks (d8, ..., d11), and the second root hash value (Rc) is determined based on the thus determined second set.

10. Server system according to one of claims 7 to 9, wherein the updated authentication tree data structure comprises a plurality of different pruning hash values (Rd), wherein each pruning hash value (Rd) is associated to a different pruning authentication tree data structure.

11. Server system according to one of claims 7 to 10, wherein the pruning authentication tree data structure and the updated authentication tree data structure represent Merkle trees or Tiger trees.

12. Server system according to one of claims 7 to 11, wherein the pruning hash value (Rd) is associated to a node of the pruning authentication tree, the node being a node reached from all data M data blocks (d0, ..., d3) to be pruned via associating authentication tree paths.

13. Method of operating a client system (200), the method comprising validating authenticity of a data block (d0, ..., d3) of an authentication tree data structure, validating being performed based on a pruning authentication value (Rd) and a second root hash value (Rc) received from a server system (100), the pruning authentication value (Rd) and the second root hash value (Rc) being associated to an updated authentication tree data structure from which the data block (d0, ..., d3) has been pruned.

14. Client system (200), the client system being adapted for validating authenticity of a data block (d0, ..., d3) of an authentication tree data structure, validating being performed based on a pruning authentication value (Rd) and a second root hash value (Rc) received from a server system (100), the pruning authentication value (Rd) and the second root hash value (Rc) being associated to an updated authentication tree data structure from which the data block (d0, ..., d3) has been pruned.

15. Authentication system (1000) comprising a server system (100) according to one of claims 7 to 12 and at least one client system (200) according to claim 14.
